(19) Europäisches Patentamt
European Patent Office
Office européen des brevets

(11) EP 3 774 929 B1

(12) **EUROPEAN PATENT SPECIFICATION**

(45) Date of publication and mention
of the grant of the patent:
**02.02.2022 Bulletin 2022/05**

(21) Application number: **19712239.3**

(22) Date of filing: **27.03.2019**

(51) International Patent Classification (IPC):
*C08F 2/00* $^{(2006.01)}$   *C08L 23/06* $^{(2006.01)}$
*F16L 9/12* $^{(2006.01)}$

(52) Cooperative Patent Classification (CPC):
(C-Sets available)
**C08L 23/06;** C08L 2203/18; C08L 2205/02   (Cont.)

(86) International application number:
**PCT/EP2019/057763**

(87) International publication number:
**WO 2019/197163 (17.10.2019 Gazette 2019/42)**

(54) **POLYETHYLENE COMPOSITION**

POLYETHYLENZUSAMMENSETZUNG

COMPOSITION DE POLYÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2018 EP 18167076**

(43) Date of publication of application:
**17.02.2021 Bulletin 2021/07**

(73) Proprietor: **SABIC Global Technologies B.V.
4612 PX Bergen op Zoom (NL)**

(72) Inventors:
• **HILDEBRANDT, Haika Johanna
6160 GA Geleen (NL)**
• **JANSSEN, Eric Johannes Cornelia
6160 GA Geleen (NL)**

(74) Representative: **Sabic Intellectual Property Group
Sabic Intellectual Property Department
P.O. Box 3008
6160 GA Geleen (NL)**

(56) References cited:
**EP-A1- 2 860 204      WO-A1-2016/188703
WO-A2-2013/101767**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6555;**
**C08L 23/06, C08L 23/0815;**
C08F 210/16, C08F 210/14, C08F 2500/12,
C08F 2500/10, C08F 2500/17, C08F 2500/04,
C08F 2500/13, C08F 2500/27, C08F 2500/30,
C08F 2500/31

**Description**

The present invention relates to a multimodal polyethylene composition. The present invention also relates to the use of the polyethylene composition for the manufacture of pipes or pipe fittings, particularly for the use in pressure pipes.

For the reliable supply of modern infrastructure with natural gas or water, polyethylene pipes play an important role to maintain high living standards. Of particular importance are polyethylene pressure pipes, which are designed to withstand high internal pressures and to fulfill operating times of at least 50 years.

The material classification of such PE pipe grades is based on the long-term failure behavior using internal pipe pressure tests at different temperatures and extrapolation methods as described in ISO 9080. Based on these tests, the minimum required strength (MRS) to ensure pipe lifetimes of at least 50 years at 20 °C is determined and leads to a classification of the materials as for example PE 80 (MRS = 8 MPa) or PE 100 (MRS = 10 MPa) according to ISO12162.

In addition, it is desired that the polyethylene compositions used for the manufacture of such pipes have a good environmental stress crack resistance (ESCR) and impact strength as for example described in ISO4437. Moreover, pipe manufacturers demand a high sagging resistance in combination with a good processability. WO2013/101767 for instance describes a bimodal polyethylene composition suitable for use as pipes exhibiting good mechanical properties such as stress crack resistance and creep resistance.

Today, there is still a need for polyethylene compositions that show enhanced creep resistance in order to design pipes that resist even higher internal pressures. Target is for example to design pipes with MRS12.5. However, this is difficult to achieve without compromising on other properties.

Furthermore, it is required that the polyethylene compositions for application in pipe need to have an MFR5 >0,2 to be considered compatible for fusion such as butt fusion or electrofusion (ISO4427:1196, paragraph 7).

It is therefore the object of the present invention to provide a polyethylene composition having an improved creep resistance and at the same time good mechanical properties such as for example slow crack growth resistance and impact resistance. Furthermore, it is the object to provide a polyethylene composition which shows good processing behavior and low sagging.

The polyethylene composition according to the invention comprises an ethylene polymer having a density in the range from $\geq$950 kg/m$^3$ to $\leq$958 kg/m$^3$, determined according to ISO 1183-1:2004, a melt flow rate MFR 5 (190°C, 5 kg) in the range from $\geq$0,16 g/10 min to $\leq$0,26 g/10 min, determined according to ISO 1133:1997, a melt flow ratio FRR (190°C, 21.6/5 kg) in the range from $\geq$22 to $\leq$40, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s.

By application of the invention, the aforementioned object is met, at least in part. It is an advantage of the present invention that the polyethylene composition according to the invention has an excellent resistance to creep and furthermore good impact resistance and stress crack resistance. Furthermore, the polyethylene composition according to the invention has a good processability.

The Flow Rate Ratio (FRR) is calculated by dividing MFR21.6 by MFR5.

Preferably, the polyethylene composition comprises an ethylene polymer having a density in the range from $\geq$952 kg/m$^3$ to $\leq$955 kg/m$^3$ as determined according to ISO 1183-1 :2004.

Preferably, the polyethylene composition comprises an ethylene polymer having a melt flow rate MFR 5 (190°C, 5 kg) in the range from $\geq$0,17 g/10 min to $\leq$0,25 g/10 min as determined according to ISO 1133:1997.

Preferably, the polyethylene composition comprises an ethylene polymer having a melt flow ratio FRR (190°C, 21,6/5 kg) in the range from $\geq$23 to $\leq$38.

More preferably, the polyethylene composition comprises an ethylene polymer having a melt flow ratio FRR (190°C, 21,6/5 kg) in the range from $\geq$25 to $\leq$35.

Even more preferably, the polyethylene composition comprises an ethylene polymer having a melt flow ratio FRR (190°C, 21,6/5 kg) in the range from $\geq$26 to $\leq$34.

Preferably, the polyethylene composition comprises an ethylene polymer having a complex viscosity at 100 rad/s and 190°C (eta$_{100}$) of at least 2700 Pa.s.

More preferably, the polyethylene composition comprises an ethylene polymer having a complex viscosity at 100 rad/s and 190°C (eta$_{100}$) of at least of at least 2800 Pa.s. Preferably, the polyethylene composition comprises an ethylene polymer having a complex viscosity at 0,01 rad/s and 190°C (eta$_{0,01}$) of at least 280000 Pa.s,

More preferably, the polyethylene composition comprises an ethylene polymer having a complex viscosity at 0,01 rad/s and 190°C (eta$_{0,01}$ )of at least 300000 Pa.s. Even more preferably, the polyethylene composition comprises an ethylene polymer having a complex viscosity at 0,01 rad/s and 190°C (eta$_{0,01}$) of at least 320000 Pa.s.

Preferably, the polyethylene composition comprises an ethylene polymer having a complex viscosity at 100 rad/s and 190°C (eta$_{100}$) of less than 5000 Pa.s, more preferably of less than 4000 Pa.s.

Preferably, the polyethylene composition comprises an ethylene polymer having a complex viscosity at 0,01 rad/s and 190°C (eta$_{100}$) of less than 500000 Pa.s, more preferably of 420000 Pa.s, even more preferably of 400000.

The rheological parameters $Eta_{100}$ and $Eta_{0,01}$ are determined by Dynamic Rheological Spectroscopy (DMS). Rheological measurements are carried out on an oscillatory rheometer ARES 4/A14 with 25 mm diameter parallel plates. Measurements are carried out on compression moulded plates of 2 mm thickness using nitrogen atmosphere and setting a strain within the linear viscoelastic regime. The frequency sweep experiment is performed at 190°C at dynamic frequencies in range of $10^{-2}$ to 100 rad/s. The complex dynamic shear viscosities, $eta_{100}$ in Pa.s, at dynamic frequency of 100 rad/s and $Eta_{0,01}$, at a dynamic frequency of 0,01 rad/s are determined directly from the viscosity data of the frequency sweep experiment measured at 190°C.

In a preferred embodiment according to the invention, the polyethylene composition comprises an ethylene polymer having a density in the range from $\geq 952$ kg/m$^3$ to $\leq 955$ kg/m$^3$, determined according to ISO 1183-1:2004 and a melt flow rate MFR 5 (190°C, 5 kg) in the range from $\geq 0,17$ g/10 min to $\leq 0,25$ g/10 min determined according to ISO 1133:1997.

In another preferred embodiment according to the invention, the polyethylene composition comprises an ethylene polymer having a density in the range from $\geq 952$ kg/m$^3$ to $\leq 955$ kg/m$^3$, determined according to ISO 1183-1:2004 and a melt flow rate MFR 5 (190°C, 5 kg) in the range from $\geq 0,17$ g/10 min to $\leq 0,25$ g/10 min determined according to ISO 1133:1997 and a melt flow ratio FRR (190°C, 21,6/5 kg) in the range from $\geq 23$ to $\leq 38$.

In another preferred embodiment according to the invention, the polyethylene composition comprises an ethylene polymer having a density in the range from $\geq 952$ kg/m$^3$ to $\leq 955$ kg/m$^3$, determined according to ISO 1183-1:2004 and a melt flow rate MFR 5 (190°C, 5 kg) in the range from $\geq 0,17$ g/10 min to $\leq 0,25$ g/10 min determined according to ISO 1133:1997 and a melt flow ratio FRR (190°C, 21,6/5 kg) in the range from $\geq 23$ to $\leq 38$ and a complex viscosity at 100 rad/s and 190°C ($eta_{100}$) of at least 2700 Pa.s and a complex viscosity at 0,01 rad/s and 190°C ($eta_{0,01}$) of at least 280000 Pa.s.

In a more preferred embodiment according to the invention, the polyethylene composition comprises an ethylene polymer having a density in the range from $\geq 952$ kg/m$^3$ to $\leq 955$ kg/m$^3$, determined according to ISO 1183-1:2004 and a melt flow rate MFR 5 (190°C, 5 kg) in the range from $\geq 0,17$ g/10 min to $\leq 0,25$ g/10 min, determined according to ISO 1133:1997 and a melt flow ratio FRR (190°C, 21,6/5 kg) in the range from $\geq 23$ to $\leq 38$ and a complex viscosity at 100 rad/s and 190°C ($eta_{100}$) of at least 2800 Pa.s, and a complex viscosity at 0,01 rad/s and 190°C ($eta_{0,01}$) of at least 300000 Pa.s, even more preferably of at least 320000 Pa.s.

In another preferred embodiment, the polyethylene composition comprises an ethylene polymer having a Mw in the range from $\geq 270$ kg/mol to $\leq 350$ kg/mol, preferably a Mw in the range from $\geq 280$ kg/mol to $\leq 340$ kg/mol, more preferably a Mw in the range from $\geq 290$ kg/mol to $\leq 330$ kg/mol.

In another preferred embodiment, the polyethylene composition comprises an ethylene polymer having an Mw/Mn in the range from $\geq 20$ to $\leq 35$, preferably an Mw/Mn in the range from $\geq 23$ to $\leq 35$, more preferably a Mw/Mn in the range from $\geq 23$ to $\leq 33$, even more preferably a Mw/Mn in the range from $\geq 23$ to $\leq 30$.

In another preferred embodiment, the polyethylene composition comprises an ethylene polymer having Mw in the range from $\geq 270$ kg/mol to $\leq 350$ kg/mol and a Mw/Mn in the range from $\geq 20$ to $\leq 35$.

In another more preferred embodiment, the polyethylene composition comprises an ethylene polymer having a Mw in the range from $\geq 280$ kg/mol to $\leq 340$ kg/mol and a Mw/Mn in the range from $\geq 23$ to $\leq 35$.

In another even more preferred embodiment, the polyethylene composition comprises an ethylene polymer having a Mw in the range from $\geq 290$ kg/mol to $\leq 330$ kg/mol and a Mw/Mn in the range from $\geq 23$ to $\leq 30$.

In a preferred embodiment, the polyethylene composition comprises an ethylene polymer having a Mw in the range from $\geq 270$ kg/mol to $\leq 350$ kg/mol, preferably a Mw in the range from $\geq 280$ kg/mol to $\leq 340$ kg/mol, more preferably a Mw in the range from $\geq 290$ kg/mol to $\leq 330$ kg/mol and/or a Mw/Mn in the range from $\geq 20$ to $\leq 35$, preferably a Mw/Mn in the range from $\geq 23$ to $\leq 35$, more preferably a Mw/Mn in the range from $\geq 23$ to $\leq 33$, even more preferably a Mw/Mn in the range from $\geq 23$ to $\leq 30$.

In another preferred embodiment according to the invention the polyethylene composition comprises an ethylene polymer having a density in the range from $\geq 952$ kg/m$^3$ to $\leq 955$ kg/m$^3$, determined according to ISO 1183-1:2004 and a melt flow rate MFR 5 (190°C, 5 kg) in the range from $\geq 0,17$ g/10 min to $\leq 0,25$ g/10 min determined according to ISO 1133:1997 and a melt flow ratio FRR (190°C, 21,6/5 kg) in the range from $\geq 23$ to $\leq 38$ and a complex viscosity at 100 rad/s and 190°C ($eta_{100}$) of at least 2700 Pa.s, and a complex viscosity at 0,01 rad/s and 190°C ($eta_{0,01}$) of at least 280000 Pa.s and a Mw in the range from $\geq 270$ kg/mol to $\leq 350$ kg/mol and a Mw/Mn in the range from $\geq 20$ to $\leq 35$.

In another preferred embodiment according to the invention the polyethylene composition comprises an ethylene polymer having a density in the range from $\geq 952$ kg/m$^3$ to $\leq 955$ kg/m$^3$, determined according to ISO 1183-1:2004 and a melt flow rate MFR 5 (190°C, 5 kg) in the range from $\geq 0,17$ g/10 min to $\leq 0,25$ g/10 min determined according to ISO 1133:1997 and a melt flow ratio FRR (190°C, 21,6/5 kg) in the range from $\geq 23$ to $\leq 38$ and a complex viscosity at 100 rad/s and 190°C ($eta_{100}$) of at least 2700 Pa.s, and a complex viscosity at 0,01 rad/s and 190°C ($eta_{0,01}$) of at least 280000 Pa.s and a Mw in the range from $\geq 280$ kg/mol to $\leq 340$ kg/mol, more preferably a Mw/Mn in the range from $\geq 23$ to $\leq 35$.

In another preferred embodiment according to the invention the polyethylene composition comprises an ethylene polymer having a density in the range from $\geq 952$ kg/m$^3$ to $\leq 955$ kg/m$^3$, determined according to ISO 1183-1:2004 and a melt flow rate MFR 5 (190°C, 5 kg) in the range from $\geq 0,17$ g/10 min to $\leq 0,25$ g/10 min determined according to ISO 1133:1997 and a melt flow ratio FRR (190°C, 21,6/5 kg) in the range from $\geq 23$ to $\leq 38$ and a complex viscosity at 100 rad/s and 190°C (eta$_{100}$) of at least 2700 Pa.s, and a complex viscosity at 0,01 rad/s and 190°C (eta$_{0,01}$) of at least 280000 Pa.s and a Mw in the range from $\geq 290$ kg/mol to $\leq 330$ kg/mol and a Mw/Mn in the range from $\geq 23$ to $\leq 30$.

The molecular weight and molecular weight distribution is measured by using size exclusion chromatography (SEC), also referred to as Gel Permeation Chromatography (GPC) using universal calibration. SEC is performed on the granule samples and weight average molecular weight (Mw), number average weight (Mn) and z-average molecular weight (Mz) are all measured in accordance with ASTM D6474-12 (Standard Test Method for Determining Molecular Weight Distribution and Molecular Weight Averages of Polyolefins by High Temperature Gel Permeation Chromatography).

In addition to the method specified by ASTM D6474-12, the method is performed using a Polymer Laboratories PL-GPC220 instrument equipped with 3 columns (Polymer Laboratories 13 $\mu$m PLgel Olexis, 300 x 7.5 mm) at an oven temperature of 160°C. A refractive index (RI) detector, a viscosity detector (Polymer Laboratories PL BV-400 viscometer) and an IR detector (Polymer Char IR5) are used. 1,2,4-trichlorobenzene stabilized with 1g/L butylhydroxytoluene (also known as 2,6-di-tert-butyl-4-methylphenol or BHT) is used as eluent. The molar mass is determined based on a calibration using linear PE standards (narrow and broad (Mw/Mn = 4 to 15)) in the range of 0.5 - 2800 kg/mol.

Samples of polymer granules are mixed with Tris (2,4-di-tert-butylphenyl)phosphite (Irgafos 168) and 1,1,3-Tris (2-methyl-4-hydroxy-5-tert-butylphenyl)butane (Topanol CA) in a weight ratio sample : Irgafos : Topanol of 1:1:1, after which the mixture thus obtained is dissolved in 1,2,4-trichlorobenzene stabilized with 1g/L BHT until the concentration of the mixture in 1,2,3-trichlorobenzene stabilized with 1g/L BHT is 0.03 wt%. Samples are dissolved for 4 hours at 150 °C in a nitrogen environment before the solution is filtrated offline (1.2 $\mu$m filter) or online using the Polymerchar system.

In another preferred embodiment according to the invention the polyethylene composition comprises an ethylene polymer wherein the ethylene polymer comprises at least two fractions wherein at least one fraction is an ethylene homopolymer fraction and at least one fraction is an ethylene copolymer fraction and wherein the at least one ethylene copolymer fraction is a copolymer of at least one alpha olefin selected from alpha olefins having 3-12 carbon atoms.

The polyethylene composition may comprise a multimodal ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s.

The polyethylene composition may comprise a bimodal ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s.

The term multimodal as used herein refers to the number of different polyethylene fractions of the ethylene polymer. A multimodal ethylene polymer comprises at least two fractions. Each of the fractions is produced under different polymerization conditions and differs therefore in molecular weight and/or comonomer content and/or comonomer distribution from another fraction. A bimodal ethylene polymer contains for example two fractions wherein each fraction is produced under different polymerization conditions. This includes the polymerization in different reactors as well as the polymerisation in one reactor with different catalyst species.

The form of the SEC curve may reflect the number of different fractions by showing distinct maxima or by a distinct broadening of the SEC curve.

In addition, different fractions may show, as a result of their difference in composition, differences in melting or crystallisation temperatures.

In contrast, a unimodal ethylene polymer comprises only one fraction produced under constant polymerisation conditions.

An ethylene copolymer or ethylene copolymer fraction is to be understood as a copolymer of ethylene and at least one comonomer. Comonomers may for example be alpha olefins.

The comonomer content is to be understood as overall comonomer content based on the amount of ethylene and the one or more comonomers in the ethylene polymer.

According to a preferred embodiment, the polyethylene composition comprises a bimodal ethylene polymer, wherein the bimodal ethylene polymer is produced in two reactors in series.

In a preferred embodiment according to the invention, the polyethylene composition comprises an ethylene polymer wherein the ethylene polymer comprises at least two fractions wherein at least one fraction is an ethylene homopolymer fraction and at least one fraction is an ethylene copolymer fraction and wherein the at least one copolymer fraction is a copolymer of at least one alpha olefin selected from alpha olefins having 4-6 carbon atoms, preferably the alpha-olefin has 6 carbon atoms.

In a preferred embodiment according to the invention, the polyethylene composition comprises an ethylene polymer, wherein the ethylene polymer comprises at least one ethylene homopolymer fraction and at least one ethylene copolymer fraction and wherein the at least one ethylene homopolymer fraction and the at least one ethylene copolymer fraction have a different molecular weight Mw.

In a preferred embodiment according to the invention, the polyethylene composition comprises a bimodal ethylene polymer wherein the bimodal ethylene polymer has a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s and wherein the ethylene polymer comprises an ethylene copolymer fraction wherein the comonomer is an alpha-olefin having 6 carbon atoms.

In a preferred embodiment according to the invention, the polyethylene composition comprises an ethylene polymer wherein the ethylene polymer comprises at least two fractions wherein at least one fraction is an ethylene homopolymer fraction and wherein the weight % of the homopolymer fraction is in range of 50-60 %, preferably 55-59 %, more preferably 56-58 % based on the total amount of all polyethylene fractions and/or wherein the MFI1.2 of the homopolymer fraction is in the range from $\geq 2,0$ to 30 $\leq$ g/10min, preferably from $\geq 3,0$ to 25 $\leq$ g/10min, more preferably from $\geq 4,0$ to $\leq 25$ g/10min.

In a preferred embodiment according to the invention, the polyethylene composition comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s and wherein the ethylene polymer comprises at least two fractions wherein at least one fraction is an ethylene homopolymer fraction and wherein the weight % of the homopolymer fraction is in range of 50-60 %, preferably 55-59 %, more preferably 56-58 % based on the total amount of all polyethylene fractions.

In a preferred embodiment according to the invention, the polyethylene composition comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s and wherein the ethylene polymer comprises at least two fractions wherein at least one fraction is an ethylene homopolymer fraction and wherein the weight % of the homopolymer fraction is in range of 50-60 %, preferably 55-59 %, more preferably 56-58 % based on the total amount of all polyethylene fractions and wherein the MFI1.2 of the homopolymer fraction is in the range from $\geq 2,0$ to 30 $\leq$ g/10min.

In a preferred embodiment according to the invention, the polyethylene composition comprises an ethylene polymer which has a comonomer content in the range from $\geq 0,1$ to $\leq 0,3$ mol %, preferably in the range from $\geq 0,15$ to $\leq 0,25$ mol %.

In a preferred embodiment according to the invention, the polyethylene composition comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s and a comonomer content in the range from $\geq 0,1$ to $\leq 0,3$ mol % .

In a preferred embodiment according to the invention, the polyethylene composition comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta$_{100}$) of at least 2500 Pa.s and a complex viscosity at 0,01 rad/s and 190°C (eta$_{0,01}$) of at least 250000 Pa.s and a comonomer content in the range from $\geq 0,1$ to $\leq 0,3$ mol % and wherein the ethylene polymer comprises a homopolymer fraction, wherein the weight % of the homopolymer is in range from 50 to 60 wt% based on the total amount of all polyethylene fractions.

According to a preferred embodiment of the invention the density of ethylene homopolymer ranges from $\geq 965$ to $\leq 971$ kg/m$^3$ as determined according to ISO 1183-1:2004.

According to a preferred embodiment of the invention the viscosity number of ethylene homopolymer ranges from $\geq 75$ to $\leq 160$ cm$^3$/g. More preferably, the viscosity number of ethylene homopolymer ranges from $\geq 90$ to $\leq 160$ cm$^3$/g. Even more preferably, the viscosity number of ethylene homopolymer ranges from $\geq 90$ to $\leq 135$ cm$^3$/g. The viscosity number of polyethylene and homopolymer A is determined according to ISO 1628-3.

According to a preferred embodiment of the invention the MFI1.2 of ethylene homopolymer ranges from $\geq 2$ to $\leq 40$ g/10min, as determined according to ISO 1133:1997. According to a more preferred embodiment of the invention the MFI1.2 of ethylene homopolymer ranges from $\geq 4$ to $\leq 25$ g/10min, as determined according to ISO 1133:1997.

In a preferred embodiment according to the invention, the polyethylene composition, comprises an ethylene polymer wherein the ethylene polymer has a Charpy impact strength in the range from $\geq 15$ kJ/m$^2$ $\leq 30$ kJ/m$^2$, preferably in the range in the range from $\geq 18$ kJ/m$^2$ to $\leq 28$ kJ/m$^2$, measured according to ISO 179-1eA at -30°C and/or Charpy impact strength at 23 °C in the range from $\geq 25$ kJ/m$^2$ to $\leq 40$ kJ/m$^2$, preferably in the range in the range from $\geq 28$ kJ/m$^2$ to $\leq 38$ kJ/m$^2$ measured according to ISO 179-1eA and/or a strain hardening modulus of at least 42 MPa, measured according to ISO/DIS 18488, and/or a strain hardening modulus in the range from $\geq 42$ MPa to $\leq 65$ MPa, preferably in the range from $\geq 42$ MPa to $\leq 60$ MPa, measured according to ISO/DIS 18488 and/or a yield stress in the range from $\geq 20$ MPa to $\leq 30$ MPa, preferably in the range from $\geq 22$ MPa to $\leq 29$ MPa and /or a creep at 5,4 MPa and 80°C after 60 min of $\leq 6\%$, preferably of $\leq 5\%$.

In a another preferred embodiment according to the invention, the polyethylene composition, comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta100) of at least 2500 Pa.s and a complex viscosity at 0,01 rad/s and 190°C (eta0,01) of at least 250000 Pa.s and a Charpy impact strength in the range from $\geq 15$ kJ/m$^2$ to $\leq 30$ kJ/m$^2$, measured according to ISO 179-1eA at -30°C and/or Charpy impact strength at 23 °C in the range from $\geq 25$ kJ/m$^2$ to $\leq 40$ kJ/m$^2$, measured according to ISO 179-1eA.

In a another preferred embodiment according to the invention, the polyethylene composition, comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta100) of at least 2500 Pa.s and a complex viscosity at 0,01 rad/s and 190°C (eta$_{0,01}$) of at least 250000 Pa.s and a creep at 5,4 MPa and 80°C after 60 min of $\leq 6\%$, preferably of $\leq 5\%$.

In a another preferred embodiment according to the invention, the polyethylene composition, comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta100) of at least 2500 Pa.s and a complex viscosity at 0,01 rad/s and 190°C (eta0,01) of at least 250000 Pa.s and a yield stress in the range from $\geq 20$ MPa to $\leq 30$ MPa, preferably in the range from $\geq 22$ MPa to $\leq 29$ MPa

In a another preferred embodiment according to the invention, the polyethylene composition, comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta100) of at least 2500 Pa.s and a complex viscosity at 0,01 rad/s and 190°C (eta0,01) of at least 250000 Pa.s and a strain hardening modulus of at least 42 MPa, measured according to ISO/DIS 18488, and a yield stress in the range from $\geq 20$ MPa to $\leq 30$ MPa, preferably in the range from $\geq 22$ MPa to $\leq 29$ MPa and a creep at 5,4 MPa and 80°C after 60 min of $\leq 6\%$, preferably of $\leq 5\%$.

In a another preferred embodiment according to the invention, the polyethylene composition, comprises an ethylene polymer having a density in the range from $\geq 950$ kg/m$^3$ to $\leq 958$ kg/m$^3$, determined according to ISO 1183-1:2004, a melt flow rate MFR 5 (190°C, 5 kg) in the range from $\geq 0,16$ g/10 min to $\leq 0,26$ g/10 min, determined according to ISO 1133:1997, a melt flow ratio FRR (190°C, 21.6/5 kg) in the range from $\geq 22$ to $\leq 40$, a complex viscosity at 100 rad/s and 190°C (eta100) of at least 2500 Pa.s and a complex viscosity at 0,01 rad/s and 190°C (eta0,01) of at least 250000 Pa.s. and a strain hardening modulus of at least 42 MPa, measured according to ISO/DIS 18488, and a yield stress in the range from $\geq 20$ MPa to $\leq 30$ MPa, preferably in the range from $\geq 22$ MPa to $\leq 29$ MPa and /or a creep at 5,4 MPa and 80°C after 60 min of $\leq 6\%$, preferably of $\leq 5\%$ and a Charpy impact strength in the range from $\geq 15$ kJ/m$^2$ to $\leq 30$ kJ/m$^2$, measured according to ISO 179-1eA at -30°C and a Charpy impact strength at 23 °C in the range from $\geq 25$ kJ/m$^2$ to $\leq 40$ kJ/m$^2$, measured according to ISO 179-1eA.

In a another preferred embodiment according to the invention, the polyethylene composition, comprises an ethylene polymer a density in the range from $\geq 952$ kg/m$^3$ to $\leq 955$ kg/m$^3$, determined according to ISO 1183-1:2004 and/or a melt flow rate MFR 5 (190°C, 5 kg) in the range from $\geq 0,17$ g/10 min to $\leq 0,25$ g/10 min, determined according to ISO 1133:1997 and/or a melt flow ratio FRR (190°C, 21,6/5 kg) in the range from $\geq 23$ to $\leq 38$ and/or a complex viscosity at 100 rad/s and 190°C (eta$_{100}$) of at least 2700 Pa.s, preferably of at least 2800 Pa.s, and/or a complex viscosity at 0,01 rad/s and 190°C (eta$_{0,01}$) of at least 280000 Pa.s, more preferably of at least 300000 Pa.s, even more preferably of at least 320000 Pa.s and a strain hardening modulus of at least 42 MPa, measured according to ISO/DIS 18488 and a yield stress from $\geq 20$ MPa to $\leq 30$ MPa, preferably from $\geq 22$ MPa to $\leq 29$ MPa.

In a another preferred embodiment according to the invention, the polyethylene composition, comprises an ethylene polymer having a density in the range from $\geq 952$ kg/m$^3$ to $\leq 955$ kg/m$^3$, determined according to ISO 1183-1:2004 and/or a melt flow rate MFR 5 (190°C, 5 kg) in the range from $\geq 0,17$ g/10 min to $\leq 0,25$ g/10 min, determined according to ISO 1133:1997 and/or a melt flow ratio FRR (190°C, 21,6/5 kg) in the range from $\geq 23$ to $\leq 38$ and/or a complex viscosity at 100 rad/s and 190°C (eta$_{100}$) of at least 2700 Pa.s, preferably of at least 2800 Pa.s, and/or a complex viscosity at 0,01 rad/s and 190°C (eta$_{0,01}$) of at least 280000 Pa.s, more preferably of at least 300000 Pa.s, even more preferably of at least 320000 Pa.s and and a creep at 5,4 MPa and 80°C after 60 min of $\leq 6\%$, preferably of $\leq 5\%$.

In a another preferred embodiment according to the invention, the polyethylene composition, comprises an ethylene polymer having a density in the range from $\geq 952$ kg/m$^3$ to $\leq 955$ kg/m$^3$, determined according to ISO 1183-1:2004 and/or a melt flow rate MFR 5 (190°C, 5 kg) in the range from $\geq 0,17$ g/10 min to $\leq 0,25$ g/10 min, determined according to ISO 1133:1997 and/or a melt flow ratio FRR (190°C, 21,6/5 kg) in the range from $\geq 23$ to $\leq 38$ and/or a complex viscosity at 100 rad/s and 190°C (eta$_{100}$) of at least 2700 Pa.s, preferably of at least 2800 Pa.s, and/or a complex viscosity at 0,01 rad/s and 190°C (eta$_{0,01}$) of at least 280000 Pa.s, more preferably of at least 300000 Pa.s, even more preferably of at least 320000 Pa.s. and a Charpy impact strength in the range from $\geq 15$ kJ/m$^2$ to $\leq 30$ kJ/m$^2$, measured according to ISO 179-1eA at -30°C and a Charpy impact strength at 23 °C in the range from $\geq 25$ kJ/m$^2$ to $\leq 40$ kJ/m$^2$, measured according to ISO 179-1eA.

In a another preferred embodiment according to the invention, the polyethylene composition, comprises an ethylene polymer having a density in the range from $\geq 952$ kg/m$^3$ to $\leq 955$ kg/m$^3$, determined according to ISO 1183-1:2004 and/or a melt flow rate MFR 5 (190°C, 5 kg) in the range from $\geq 0,17$ g/10 min to $\leq 0,25$ g/10 min, determined according to ISO 1133:1997 and/or a melt flow ratio FRR (190°C, 21,6/5 kg) in the range from $\geq 23$ to $\leq 38$ and/or a complex viscosity at 100 rad/s and 190°C (eta$_{100}$) of at least 2700 Pa.s, preferably of at least 2800 Pa.s, and/or a complex viscosity at 0,01 rad/s and 190°C (eta$_{0,01}$) of at least 280000 Pa.s and a strain hardening modulus of at least 42 MPa, measured according to ISO/DIS 18488 and a yield stress from $\geq 20$ MPa to $\leq 30$ MPa, preferably from $\geq 22$ MPa to $\leq 29$ MPa and a creep at 5,4 MPa and 80°C after 60 min of $\leq 6\%$, and a Charpy impact strength in the range from $\geq 15$ kJ/m$^2$ to $\leq 30$ kJ/m$^2$, measured according to ISO 179-1eA at -30°C and a Charpy impact strength at 23 °C in the range from $\geq 25$ kJ/m$^2$ to $\leq 40$ kJ/m$^2$, measured according to ISO 179-1eA.

Creep strain tests may be used to rank materials for pressure resistance. The viscoelastic response of a material describes its ability to resist to load before permanent deformation occurs. Indeed, it is the excitation and availability of the mechanical relaxation times before yield in the polymer that will determine how resilient the material will be to long term creep loads. This property is assessed before permanent deformation sets in. Hence, applying a constant load or strain and recording the strain or stress will indicate the amount of relaxation that has occurred in the material and this provides a measure for IPT behavior i.e. the higher the creep strain rate, the lower the resistance to internal pressure.

Measurements are performed as follows: The PE granules are compression moulded according to ISO 1872-2. ISO 527-2 type 1BA specimens are milled from the compression moulded sheet. Zwick 1455 tensile testing machine having a Zwick 1kN load cell are used for performing the creep measurements at 80°C. The specimens are equilibrated at a temperature of 80 ºC for 30 min prior measurement. A load is applied to the sample (5.4 MPa) for 60 minutes and the elongation measured. The elongation of the sample after set time (60 minutes) is used as a measure to rank the materials for their pressure resistance.

The polyethylene composition according to the invention, may be produced by any process known in the art, such as for example compounding. Preferably, the polyethylene composition may be prepared by reactor blending, such as in a multistage process.

In a preferred embodiment according to the invention, the polyethylene composition comprises an ethylene polymer, wherein the ethylene polymer is produced in a multi-stage process, preferably in a bimodal process.

According to a preferred embodiment of the invention the polyethylene composition is produced with a two-step slurry polymerisation process using cascaded reactors in the presence of a Ziegler Natta catalyst system.

The production processes for bimodal high density polyethylene (HDPE) are summarised at pages 16-20 of "PE 100 Pipe systems" (edited by Brömstrup; second edition, ISBN 3-8027-2728-2).

The production of bimodal high density polyethylene (HDPE) via a low pressure slurry process is known to the person skilled in the art and is for example described by Alt et al. in "Bimodal polyethylene-Interplay of catalyst and process" (Macromol.Symp. 2001, 163, 135-143). In a two stage cascade process the reactors may be fed continuously with a mixture of monomers, hydrogen, catalyst/ co-catalyst and diluent recycled from the process. In the reactors, polymerisation of ethylene occurs as an exothermic reaction at pressures in the range from for example 0.2 MPa (2 bar) to 1MPa (10 bar) and at temperatures in the range from for example 75 °C to 85 °C. The heat from the polymerisation reaction is removed by means of external cooling. The characteristics of the polyethylene are determined amongst others by the catalyst system and by the concentrations of catalyst, comonomer and hydrogen.

The concept of the two stage cascade process is elucidated at pages 137-138 by Alt et al. "Bimodal polyethylene-Interplay of catalyst and process" (Macromol.Symp. 2001, 163). The reactors are set up in cascade with different conditions in each reactor including for example a high hydrogen content in the first reactor and a low hydrogen content in the second reactor. This allows for the production of HDPE with a bimodal molecular mass distribution and desired co monomer content in the polyethylene chains. For reasons of monomer efficiency, it is common practise that the polymer suspension or "slurry" obtained after the second reactor flows into a so-called post reactor. In this reactor the final polymerisation takes place, resulting in a conversion rate of more than 99% of the monomers used. The suspension then flows to a suspension receiver and the suspension leaving the receiver is separated, for example via a decanter centrifuge. The resulting wet polymer is fed to a fluidised bed dryer and the liquid part goes back to the reactors. After drying the extrusion step takes place. The solvent coming from the drying of the polymer is recycled after purification by amongst other distillation.

The polyethylene composition may comprise additives such as for example carbon black, pigments, stearates, UV stabilizers for example sterically hindered amines, fillers, minerals, lubricants and/or other stabilisers. Preferred are mixtures comprising at least 95 wt%, preferably at least 97 wt% of the ethylene polymer based on the total weight of the polyethylene composition. Such additives may be added during extrusion of the polymer powder into pellets. Extrusion of the ethylene polymer is preferably carried out on a twin screw extruder at temperatures of 150 to 230°C.

In a preferred embodiment the polyethylene composition according to the invention, comprises an ethylene polymer wherein the ethylene polymer is polymerised in the presence of a Ziegler Natta catalyst comprising a solid catalyst component which is contacted with an aluminium based cocatalyst.

According to a further preferred embodiment of the invention the ethylene polymer is produced with a two-step slurry polymerisation process using cascaded reactors in the presence of a catalyst system comprising

(I) the solid reaction product obtained by reaction of:

a) a hydrocarbon solution containing

1) an organic oxygen containing magnesium compound or a halogen containing magnesium compound and
2) an organic oxygen containing titanium compound and

b) an aluminium halogenide having the formula $AlR_n X_{3-n}$ in which R is a hydrocarbon moiety containing 1 - 10 carbon atoms , X is halogen and $0 < n < 3$ and

(II) an aluminium compound having the formula $AlR_3$ in which R is a hydrocarbon moiety containing 1 - 10 carbon atom .

During the reaction of the hydrocarbon solution comprising the organic oxygen containing magnesium compound and the organic oxygen containing titanium compound with component (I b) a solid catalyst precursor precipitates and after the precipitation reaction the resulting mixture is heated to finish the reaction.

The aluminium compound (II) is dosed prior to or during the polymerization and may be referred to as a cocatalyst.

Suitable organic oxygen containing magnesium compounds include for example magnesium alkoxides such as magnesium methylate, magnesium ethylate and magnesium isopropylate and alkylalkoxides such as magnesium ethylethylate and so called carbonized magnesiumalkoxide such as magnesium ethyl carbonate. Preferably, the organic oxygen containing magnesium compound is a magnesium alkoxide. Preferably the magnesium alkoxide is magnesium ethoxide $Mg(OC_2H_5)_2$. Suitable halogen containing magnesium compounds include for example magnesium dihalides and magnesium dihalide complexes wherein the halide is preferably chlorine.

Preferably the hydrocarbon solution comprises an organic oxygen containing magnesium compound as (I) (a) (1).

Suitable organic oxygen containing titanium compound may be represented by the general formula $[TiO_x (OR)_{4-2x}]_n$ in which R represents an organic moiety, x ranges from 0 to 1 and n ranges from 1 to 6.

Suitable examples of organic oxygen containing titanium compounds include alkoxides, phenoxides, oxyalkoxides, condensed alkoxides, carboxylates and enolates. Preferably the organic oxygen containing titanium compounds is a titanium alkoxide. Suitable alkoxides include for example $Ti (OC_2H_5)_4$, $Ti (OC_3H_7)_4$, $TiOC_4H_9)_4$ and $Ti(OC_8H_{17})_4$. Preferably the organic oxygen containing titanium compound is $Ti (OC_4H_9)_4$.

Preferably the aluminium halogenide is a compound having the formula $AlR_n X_{3-n}$ in which R is a hydrocarbon moiety containing 1 - 10 carbon atoms , X is halogen and $0.5 < n < 2$. Suitable examples of the aluminium halogenide in (I) b having the formula $AlR_nX_{3-n}$ include ethyl aluminium dibromide, ethyl aluminium dichloride, propyl aluminium dichloride, n- butyl aluminium dichloride, iso butyl aluminium dichloride, diethyl aluminium chloride, diisobutyl aluminium chloride. Preferably X is Cl. Preferably the organo aluminium halogenide in (I) b) is an organo aluminium chloride, more preferably the organo aluminium halogenide in (I) b) is chosen from ethyl aluminium dichloride, diethyl aluminium dichloride, isobutyl aluminium dichloride, diisobutyl aluminium chloride or mixtures thereof.

Generally the molar ratio of Al from I b): Ti from I a) 2 ranges from 3:1 to 16:1. According to a preferred embodiment of the invention the molar ratio of Al from I b): Ti from I a) 2 ranges from 6:1 to 10:1.

Suitable examples of the cocatalyst of the formula $AlR_3$ include triethyl aluminium, tri isobutyl aluminium, tri-n-hexyl aluminium and tri octyl aluminium. Preferably the aluminium compound in (II) of the formula $AlR_3$ is tri ethyl aluminium or tri isobutyl aluminium.

The hydrocarbon solution of organic oxygen containing magnesium compound and organic oxygen containing titanium compound can be prepared according to procedures as disclosed for example in US 4178300 and EP0876318. The solutions are in general clear liquids. In case there are any solid particles, these can be removed via filtration prior to the use of the solution in the catalyst synthesis. Generally the molar ratio of magnesium: titanium is lower than 3:1 and preferably the molar ratio magnesium: titanium ranges from 2:1 to 3:1.

Generally the molar ratio of aluminium from (II): titanium from (a) ranges between 1:1 and 300:1 and preferably the molar ratio of aluminium from (II): titanium from (a) ranges from 3:1 to 100:1.

The catalyst may be obtained by a first reaction between a magnesium alkoxide and a titanium alkoxide, followed by dilution with a hydrocarbon solvent, resulting in a soluble complex consisting of a magnesium alkoxide and a titanium alkoxide and thereafter a reaction between a hydrocarbon solution of said complex and the organo aluminium halogenide having the formula $AlR_nX_{3-n}$

Optionally an electron donor can be added either during the preparation of the solid catalytic complex (at the same time as the subsequent step or in an additional step) or at the polymerization stage. The addition of an electron donor is for example disclosed in WO2013087167.

Generally, the aluminium halogenide having the formula $AlR_nX_{3-n}$ is used as a solution in a hydrocarbon. Any hydrocarbon that does not react with the organo aluminium halogenide is suitable to be applied as the hydrocarbon.

The sequence of the addition can be either adding the hydrocarbon solution containing the organic oxygen containing magnesium compound and organic oxygen containing titanium compound to the compound having the formula $AlR_nX_{3-n}$ or the reversed.

The temperature for this reaction can be any temperature below the boiling point of the used hydrocarbon. Generally the duration of the addition is preferably shorter than 1 hour.

In the reaction of the hydrocarbon solution of the organic oxygen containing magnesium compound and the organic oxygen containing titanium compound with the organo aluminium halogenide of formula $AlR_nX_{3-n}$, the solid catalyst precursor precipitates. After the precipitation reaction the resulting mixture is heated for a certain period of time to finish the reaction. After the reaction the precipitate is filtered and washed with a hydrocarbon. Other means of separation of the solids from the diluents and subsequent washings can also be applied, like for example multiple decantation steps. All steps should be performed in an inert atmosphere of nitrogen or another suitable inert gas.

The polymerization may be carried out in the presence of an anti-static agent or anti fouling agent in an amount ranging from for example 1 to 500 ppm related to the total amount of reactor contents.

Furthermore, the present invention relates to an article, preferably a pipe, comprising the polyethylene composition according to the invention or obtainable by a process according the invention, and to the use of such a polyethylene composition for the production of an article, preferably a pipe.

The polyethylene composition is suitable to be applied in the production of pipes, pipe fittings, films and blow molding applications and injection molding applications. Preferably, the polyethylene composition according to the invention is applied in the production of pipes, for example pressure pipes i.e. PE80 and PE100. The pipes may be used for the transport of fluids such as water and drinking water and slurries for example sewage. The pipe may also be suitable for the transport of gas.

The invention will be elucidated by means of the following non-restrictive examples.

**Examples**

**1. Measurement methods**

Density

The density of the polymers is measured according to ISO1183.

Viscosity number (J1)

The viscosity number is determined according to ISO 1628-3.

Melt flow rate (MFR)

The melt flow rates (MFR's) are determined according to ISO 1133:1997 under a load of 5 kg (MFR 5), 10 kg (MFR 10) and 21.6 kg (MFR 21.6) at 190°C.

The Flow Rate Ratio (FRR) is being calculated as MFR 21.6 divided by MFR 5.

Tensile test

The tensile tests are performed according to ISO 527-2, test bar type1B.

Charpy impact strength

The impact strength is measured according to Notched Charpy measurement at 23°C and at -30°C according to ISO 179, test bar type 1eA.

Strain hardening

The resistance to slow crack growth is measured using the strain hardening method according to ISO/DIS 18488

Dynamic Rheological Spectroscopy (DMS)

The rheological parameters $Eta_{100}$ and $Eta_{0,01}$ are determined by DMS. Rheological measurements are carried out on an oscillatory rheometer ARES 4/A14 with 25 mm diameter parallel plates. Measurements are carried out on compression moulded plates of 2 mm thickness using nitrogen atmosphere and setting a strain within the linear viscoelastic regime. The frequency sweep experiment is performed at 190°C at dynamic frequencies in range of $10^{-2}$ to 100 rad/s. The complex dynamic shear viscosities, $eta_{100}$ in Pa.s, at dynamic frequency of 100 rad/s and $Eta_{0,01}$, at a dynamic frequency of 0,01 rad/s are determined directly from the viscosity data of the frequency sweep experiment measured at 190°C.

Creep strain test

Creep strain tests have been used to rank materials for pressure resistance.

Measurements are performed as follows: The PE granules are compression moulded according to ISO 1872-2. ISO 527-2 type 1BA specimens are milled from the compression moulded sheet. Zwick 1455 tensile testing machine having a Zwick 1kN load cell are used for performing the creep measurements at 80°C. The specimens are equilibrated at a temperature of 80 ºC for 30 min prior measurement. A load is applied to the sample (5.4 MPa) for 60 minutes and the elongation measured. The elongation of the sample after set time (60 minutes) is used as a measure to rank the materials for their pressure resistance.

Size exclusion chromatography (SEC)

The molecular weight and molecular weight distribution is measured by using size exclusion chromatography (SEC) using universal calibration. SEC is performed on the granule samples and weight average molecular weight (Mw), number average weight (Mn) and z-average molecular weight (Mz) are all measured in accordance with ASTM D6474-12 (Standard Test Method for Determining Molecular Weight Distribution and Molecular Weight Averages of Polyolefins by High Temperature Gel Permeation Chromatography).

In addition to the method specified by ASTM D6474-12, the method is performed using a Polymer Laboratories PL-GPC220 instrument equipped with 3 columns (Polymer Laboratories 13 $\mu$m PLgel Olexis, 300 x 7.5 mm) at an oven temperature of 160°C. A refractive index (RI) detector, a viscosity detector (Polymer Laboratories PL BV-400 viscometer) and an IR detector (Polymer Char IR5) are used. 1,2,4-trichlorobenzene stabilized with 1g/L butylhydroxytoluene (also known as 2,6-di-tert-butyl-4-methylphenol or BHT) is used as eluent. The molar mass is determined based on a calibration using linear PE standards (narrow and broad (Mw/Mn = 4 to 15)) in the range of 0.5 - 2800 kg/mol.

Samples of polymer granules are mixed with Tris (2,4-di-tert-butylphenyl)phosphite (Irgafos 168) and 1,1,3-Tris (2-methyl-4-hydroxy-5-tert-butylphenyl)butane (Topanol CA) in a weight ratio sample : Irgafos : Topanol of 1:1:1, after which the mixture thus obtained is dissolved in 1,2,4-trichlorobenzene stabilized with 1g/L BHT until the concentration of the mixture in 1,2,3-trichlorobenzene stabilized with 1g/L BHT is 0.03 wt%. Samples are dissolved for 4 hours at 150 °C in a nitrogen environment before the solution is filtrated offline (1.2 $\mu$m filter) or online using the Polymerchar system.

Nuclear magnetic resonance (NMR)

For 13C-NMR measurements, 150 mg of each sample is dissolved at 135°C in 3 ml of a deuterated 1,1,2,2-tetrachloroethane-d2 (TCE-d2) / butylated hydroxytoluene (BHT) stock solution using a 10 mm NMR tube. The stock solution is made by dissolving 5 mg on BHT in 25 ml of TCE-d2. Oxygen concentration in the tube was reduced by flushing the tube for at least 1 min with nitrogen before dissolution.

All NMR experiments are carried out on a Bruker 500 Avance III HD spectrometer equipped with a 10 mm DUAL (proton and carbon) cryogenically cooled probe head operating at 125°C. The 13C-NMR measurements are performed using a spectral width of 220 ppm, an acquisition time of about 1.4 seconds and a relaxation delay of 20 seconds between each of the 512 transients. Zero-filling and Fourier Transformation with resolution enhancement are done to process the data. The spectra are calibrated by setting the central signal of TCE's triplet at 74.2ppm.

The 13C resonances are assigned according to literature [1-8].

The co-monomer content is calculated as follows :

$$ mol\,\% = \frac{I_{com\,per\,C}}{(I_{total} - n^* I_{com\,per\,C})/2 + I_{com\,per\,C}} * 100\% $$

$$ wt\,\% = \frac{I_{com\,per\,C} * M_{com}}{(I_{total} - n^* I_{com\,per\,C}) * 14 + I_{com\,per\,C} * M_{com}} * 100\% $$

$I_{com\,per\,C}$ = integral per C-atom of the comonomer
$I_{total}$ = Integral for the area 0 - 50 ppm
n = number of C-atoms per comonomer

References

1. M. de Pooter et al., Journal of Applied Polymer Sci. 42, 399 (1991),
2. J.C.Randall, J.Macromol. Sci. Rev. Macromol. Chem. Phys. C229, 225 (1989)
3. G.Xu and E.Ruckenstein, Macromolecules 1998, 4724
4. Randall, I.M.S.Rev. Macromol.Chem.Phys. C29 (2/3), 201-317 (1989)
5. Sahoo et al. Macromolecules, 36, 4017-4028 (2003)
6. R. Seeger, G. Maciel, Anal. Chem. 76, 5734-5747 (2004)
7. W. Liu, P. Rinaldi, Macromelecules, 34, 4757-4767 (2001)
8. Rinaldi, Macromolecules 2003, 36, 4017-4028

**2. Preparation of samples**

1. Preparation of a hydrocarbon solution comprising the organic oxygen containing magnesium compound and the organic oxygen containing titanium compound (MGT)

100 grams of granular Mg(OC2H5)2 and 150 millilitres of Ti(OC4H9)4 were brought in a 2 litre round bottomed flask equipped with a reflux condensor and stirrer. While gently stirring, the mixture was heated to 180 °C and subsequently stirred for 1,5 hours. During this, a clear liquid was obtained. The mixture was cooled down to 120 °C and subsequently diluted with 1480 ml of hexane. Upon addition of the hexane, the mixture cooled further down to 67 °C. The mixture was kept at this temperature for 2 hours and subsequently cooled down to room temperature. The resulting clear solution was stored under nitrogen atmosphere and was used as obtained. Analyses on the solution showed a titanium concentration of 0,25 mol/l.

2. Preparation of the catalyst

In a 0,8 liters glass reactor, equipped with baffles, reflux condenser and stirrer, 424 ml hexane and 160 ml of the complex MGT were dosed. The stirrer was set at 1200 rpm. In a separate flask, 100 ml of 50% ethyl aluminum dichloride (EADC) solution was added to 55 mL of hexane. The resulting EADC solution was dosed into the reactor in 15 minutes using a peristaltic pump. Subsequently, the mixture was refluxed for 2 hours. After cooling down to ambient temperature, the obtained red/brown suspension was transferred to a glass P4 filter and the solids were separated. The solids were washed 3 times using 500 ml of hexane. The solids were taken up in 0,5 L of hexane and the resulting slurry was stored under nitrogen. The solid content was 64 g ml$^{-1}$.

### 3. Polymerisation of Inventive sample 1 (Inv. 1)

The polymerization was carried out in a 20 litres autoclave using 10 litres purified hexane as a diluent. 8 mmols of tri-isobutylaluminum were added to the 10 litres purified hexane. In the first stage of the polymerization reaction the mixture was heated to 85°C and pressurized with 1,2 bars ethylene and a hydrogen to ethylene ratio in the headspace of 1,7 v/v (volume/volume). Subsequently a slurry containing 30 mg of the catalyst obtained as described under 2. was dosed. The temperature was maintained at 85°C and the pressure was kept constant by feeding ethylene. The amount of ethylene, needed to maintain constant pressure was monitored and is considered to be a direct measure for the amount of polymer produced. The hydrogen to ethylene ratio in the headspace was measured via online-GC and hydrogen was fed to maintain this ratio constant at 1,7v/v. The first phase of the reaction was stopped after 180 minutes. Stopping was performed by de-pressurizing and cooling down the reactor contents. The second stage of the reactor is started raising the temperature to 80 °C. At 80 °C the pressure is released, followed by the addition of 1-hexene (165 ml) and pressurizing the reactor with ethylene and hydrogen. The set partial pressure of ethylene in the second phase is 1,7 bar and the ratio for hydrogen to ethylene is 0,030 v/v. The reaction was stopped when a split of 57 had been reached. This split can be calculated directly by comparing the amount of ethylene uptake during the different stages of polymerisation. The polymerisation was stopped by de-pressurizing and cooling down the reactor. The reactor contents were passed through a filter; the polymer powder was collected and subsequently dried.

The PE powder was stabilised by adding 2000 ppm of calcium stearate, 2000 ppm of Irganox 1010 and 1000 ppm of Irgafos 168. The stabilised powder was extruded into pellets using a lab scale co-rotating twin screw extruder having a L/D of 25,5, throughput of 50g/min and rpm of 100. The pellets were used for the mentioned analyses.

### 4. Polymerisation of Inventive sample 2 (Inv. 2)

The polymerization was carried out similarly to the procedure as described in 3. with the exceptions that the hydrogen to ethylene ratio in the first polymerisation stage was maintained at 2,6 and the reaction was stopped after 103 minutes. In the second stage, 1-hexene (165 ml) was used and the ratio of hydrogen to ethylene was maintained at 0,025. Split was 57.

The split of the bimodal polymer is defined as the weight fraction of the lower molecular weight material in the ethylene polymer. For the semi-batch process as described in the polymerization examples, this translates into the cumulative ethylene consumption from the first polymerization step compared to the cumulative ethylene consumption in the combined first and second step. In Table 1 the material properties of the products according to invention, the Inventive Examples (Inv.) 1 and 2 and Comparative Examples (Comp.) 1 to 3 are given. All three Comparative Examples, Comp. 1-3, are commercial PE100 HDPE pipe grades, which are well-established and known in the market. Characterization of product properties is done on stabilized samples.

Table 1

| Parameter | Unit | Inv.1 | Inv.2 | Comp.1 | Comp.2 | Comp.3 |
|---|---|---|---|---|---|---|
| **Reactor 1**, homopolymer fraction | | | | | | |
| Temperature | °C | 85 | 85 | | | |
| Ethylene partial pressure | bar | 1,2 | 1,2 | | | |
| H2/C2 ratio in headspace | v/v | 1,7 | 2,6 | | | |
| J1 | cm$^3$/g | 130 | 100 | | | |
| Melt flow rate (MFR) 1.2 | g/10 min | 5,8 | 20,0 | | | |
| Split | wt% | 57 | 57 | | | |
| Density [kg/m$^3$] | | | | | | |
| **Reactor 2** | | | | | | |
| Temperature | °C | 80 | 80 | | | |
| Ethylene partial pressure | bar | 1,7 | 1,7 | | | |
| H2/C2 ratio in headspace | v/v | 0,030 | 0,025 | | | |

(continued)

| Properties measured on granules | | | | | | |
|---|---|---|---|---|---|---|
| Melt flow rate (MFR) 5 | g/10 min | 0,19 | 0,21 | 0,26 | 0,33 | 0,29 |
| Melt flow rate (MFR) 10 | g/10 min | 0,78 | 0,93 | | | |
| Melt flow rate (MFR) 21.6 | g/10 min | 5,25 | 6,86 | 9,51 | 9,84 | 8,71 |
| Flow rate ratio (FRR) 21.6/5 | | 27,6 | 32,7 | 36,6 | 29,8 | 30,0 |
| Density | kg/m$^3$ | 952,8 | 953,9 | 951,5 | 953,4 | 950,1 |
| Eta$_{100}$ | Pa.s | 3218 | 2829 | 2263 | 2403 | 2377 |
| Eta$_{0,01}$ | Pa.s | 323040 | 330500 | 232380 | 180000 | 195000 |
| Mw | kg/mol | 300 | 290 | 260 | - | - |
| Mw/Mn | kg/mol | 24,8 | 27,9 | 34,8 | - | - |
| Endgroups | /1000 C | 1,2 | 1,8 | 3,0 | - | - |
| Butyl Branches | /1000 C | 0,9 | 1,2 | 3,2 | - | - |
| Hexene content | mol% | 0,2 | 0,2 | | - | - |
| Hexene content | wt% | 0,6 | 0,7 | 1,9 | - | - |
| Charpy impact, 23 °C | kJ/m$^2$ | 36,5 | 30,7 | 37,1 | - | - |
| Charpy impact, -30 °C | kJ/m$^2$ | 26,2 | 19,7 | 13,4 | - | - |
| Yield stress | MPa | 26,6 | 27,2 | 24,4 | - | - |
| E- modulus | MPa | 1164 | 1176 | 937 | - | - |
| Creep 5,4 MPa 80°C 60 min | % | 4,8 | 5,0 | 20,8 | - | - |
| SH | MPa | 44,10 | 51,00 | | | |

The table shows that the samples according to the invention, sample Inv. 1 and Inv. 2 have excellent mechanical properties, such as impact strength, yield stress and E-modulus and stress crack resistance. In particular, the samples show a low creep strain. Standard PE 100 is known to have a Creep of 9% and higher at 5,4 MPa, 80°C and 60 min.

**Claims**

1.  A polyethylene composition comprising an ethylene polymer having a density in the range from ≥950 kg/m$^3$ to ≤958 kg/m$^3$, determined according to ISO 1183-1:2004, a melt flow rate MFR 5 (190°C, 5 kg) in the range from ≥0,16 g/10 min to ≤0,26 g/10 min, determined according to ISO 1133:1997, a melt flow ratio FRR (190°C, 21.6/5 kg) in the range from ≥22 to ≤40, a complex viscosity at 100 rad/s and 190°C (eta100) of at least 2500 Pa.s and a complex viscosity at 0,01 rad/s and 190°C (eta$_{0,01}$) of at least 250000 Pa.s.

2.  A polyethylene composition according to claim 1 wherein the ethylene polymer has a density in the range from ≥952 kg/m$^3$ to ≤955 kg/m$^3$, determined according to ISO 1183-1:2004 and/or a melt flow rate MFR 5 (190°C, 5 kg) in the range from ≥0,17 g/10 min to ≤0,25 g/10 min, determined according to ISO 1133:1997 and/or a melt flow ratio FRR (190°C, 21,6/5 kg) in the range from ≥23 to ≤38 and/or a complex viscosity at 100 rad/s and 190°C (eta$_{100}$) of at least 2700 Pa.s, preferably of at least 2800 Pa.s, and/or a complex viscosity at 0,01 rad/s and 190°C (eta$_{0,01}$) of at least 280000 Pa.s, more preferably of at least 300000 Pa.s, even more preferably of at least 320000 Pa.s.

3.  A polyethylene composition according to any of claims 1-2 wherein the ethylene polymer has a Mw in the range from ≥270 kg/mol to ≤350 kg/mol, preferably a Mw in the range from ≥280 kg/mol to ≤340 kg/mol, more preferably a Mw in the range from ≥290 kg/mol to ≤330 kg/mol and/or a Mw/Mn in the range from ≥20 to ≤35, preferably a Mw/Mn in the range from ≥23 to ≤35, more preferably a Mw/Mn in the range from ≥23 to ≤33, even more preferably a Mw/Mn in the range from ≥23 to ≤30.

4. A polyethylene composition according to any of claims 1-3 wherein the ethylene polymer comprises at least two fractions wherein at least one fraction is an ethylene homopolymer fraction and at least one fraction is an ethylene copolymer fraction and wherein the at least one ethylene copolymer fraction is a copolymer of at least one alpha olefin selected from alpha olefins having 3-12 carbon atoms.

5. A polyethylene composition according to any of claims 1-3 wherein the ethylene polymer comprises at least two fractions wherein at least one fraction is an ethylene homopolymer fraction and at least one fraction is an ethylene copolymer fraction and wherein the at least one copolymer fraction is a copolymer of at least one alpha olefin selected from alpha olefins having 4-6 carbon atoms, preferably the alpha-olefin has 6 carbon atoms.

6. A polyethylene composition according to any of claims 4-5 wherein the at least one ethylene homopolymer fraction and the at least one ethylene copolymer fraction have a different molecular weight Mw.

7. A polyethylene composition according to claim 4-5, wherein the weight (wt) % of the homopolymer fraction is in range of 50-60 wt%, preferably 55-59 wt%, more preferably 56-58 wt% based on the total amount of the ethylene polymer and/or wherein the MFI1.2 (190°C, 1.2 kg), determined according to ISO 1133:1997 of the homopolymer fraction is in the range from $\geq 2,0$ to $30 \leq$ g/10min, preferably from $\geq 3,0$ to $\leq 25$ g/10min, more preferably from $\geq 4,0$ to $\leq 25$ g/10min.

8. A polyethylene composition according to any of claims 1-7, wherein the ethylene polymer has a comonomer content in the range from $\geq 0,1$ to $\leq 0,3$ mol %, preferably in the range from $\geq 0,15$ to $\leq 0,25$ mol %.

9. A polyethylene composition according to any of claims 1-8, wherein the ethylene polymer has a Charpy impact strength in the range from $\geq 15$ kJ/m$^2$ to $\leq 30$ kJ/m$^2$, preferably in the range in the range from $\geq 18$ kJ/m$^2$ to $\leq 28$ kJ/m$^2$, measured according to ISO 179-1eA at -30°C and/or a Charpy impact strength at 23 °C in the range from $\geq 25$ kJ/m$^2$ to $\leq 40$ kJ/m$^2$, preferably in the range in the range from $\geq 28$ kJ/m$^2$ to $\leq 38$ kJ/m$^2$ measured according to ISO 179-1eA and/or a strain hardening modulus of at least 42 MPa, measured according to ISO/DIS 18488, and/or a strain hardening modulus in the range from $\geq 42$ MPa to $\leq 65$ MPa, preferably in the range from $\geq 42$ MPa to $\leq 60$ MPa, measured according to ISO/DIS 18488 and/or a yield stress in the range from $\geq 20$ MPa to $\leq 30$ MPa, preferably in the range from $\geq 22$ MPa to $\leq 29$ MPa and /or a creep at 5,4 MPa and 80°C after 60 min of $\leq 6\%$, preferably of $\leq 5\%$.

10. A polyethylene composition according to any of claims 1-9, wherein the polyethylene composition comprises at least 95 wt% of the ethylene polymer, preferably at least 97 wt% based on the total amount of the composition.

11. A process for the production of a polyethylene composition according to any of the preceding claims, wherein the ethylene polymer is produced in a multi-stage process, preferably in a bimodal process.

12. The process according to claim 11, wherein the ethylene polymer is polymerised in the presence of a Ziegler Natta catalyst comprising a solid catalyst component which is contacted with an aluminium based cocatalyst.

13. An article, preferably being a pipe, comprising the polyethylene composition according to any of claims 1-10 or polyethylene composition obtained by the process according to any one of claims 11-12.

14. Use of a polyethylene composition according to any of claims 1 to 10 for the production of an article.

15. Use of a polyethylene composition according to any of claims 1 to 10 for the production of a pipe.

**Patentansprüche**

1. Polyethylenzusammensetzung, umfassend ein Ethylenpolymer mit einer Dichte im Bereich von $\geq 950$ kg/m$^3$ bis $\leq 958$ kg/m$^3$, die gemäß ISO 1183-1:2004 bestimmt ist, einer Schmelzflussrate MFR 5 (190 °C, 5 kg) im Bereich von $\geq 0,16$ g/10 min bis $\leq 0,26$ g/10 min, die gemäß ISO 1133:1997 bestimmt ist, einem Schmelzflussverhältnis FRR (190 °C, 21,6/5 kg) im Bereich von $\geq 22$ bis $\leq 40$, einer komplexen Viskosität bei 100 rad/s und 190 °C (eta$_{100}$) von mindestens 2500 Pa.s und einer komplexen Viskosität bei 0,01 rad/s und 190 °C (eta0,01) von mindestens 250.000 Pa.s.

2. Polyethylenzusammensetzung nach Anspruch 1, wobei das Ethylenpolymer eine Dichte im Bereich von $\geq 952$ kg/m$^3$ bis $\leq 955$ kg/m$^3$, die gemäß ISO 1183-1:2004 bestimmt ist, und/oder eine Schmelzflussrate MFR 5 (190 °C, 5 kg) im Bereich von ≥0,17 g/10 min bis ≤0,25 g/10 min, die gemäß ISO 1133:1997 bestimmt ist, und/oder ein Schmelzflussverhältnis FRR (190 °C, 21,6/5 kg) im Bereich von ≥23 bis ≤38 und/oder eine komplexe Viskosität bei 100 rad/s und 190 °C (eta$_{100}$) von mindestens 2700 Pa.s, bevorzugt von mindestens 2800 Pa.s, und/oder eine komplexe Viskosität bei 0,01 rad/s und 190 °C (eta$_{0,01}$) von mindestens 280.000 Pa.s, besonders bevorzugt von mindestens 300.000 Pa.s, ganz besonders bevorzugt von mindestens 320.000 Pa.s aufweist.

3. Polyethylenzusammensetzung nach einem der Ansprüche 1 bis 2, wobei das Ethylenpolymer ein Mw im Bereich von ≥270 kg/mol bis ≤350 kg/mol, bevorzugt ein Mw im Bereich von ≥280 kg/mol bis ≤340 kg/mol, besonders bevorzugt ein Mw im Bereich von ≥290 kg/mol bis ≤330 kg/mol und/oder ein Mw/Mn im Bereich von ≥20 bis ≤35, bevorzugt ein Mw/Mn im Bereich von ≥23 bis ≤35, besonders bevorzugt ein Mw/Mn im Bereich von ≥23 bis ≤33, ganz besonders bevorzugt ein Mw/Mn im Bereich von ≥23 bis ≤30 aufweist.

4. Polyethylenzusammensetzung nach einem der Ansprüche 1 bis 3, wobei das Ethylenpolymer mindestens zwei Fraktionen umfasst, wobei mindestens eine Fraktion eine Ethylenhomopolymerfraktion ist und mindestens eine Fraktion eine Ethylencopolymerfraktion ist und wobei die mindestens eine Ethylencopolymerfraktion ein Copolymer aus mindestens einem alpha-Olefin ist, das aus alpha-Olefinen mit 3 bis 12 Kohlenstoffatomen ausgewählt ist.

5. Polyethylenzusammensetzung nach einem der Ansprüche 1 bis 3, wobei das Ethylenpolymer mindestens zwei Fraktionen umfasst, wobei mindestens eine Fraktion eine Ethylenhomopolymerfraktion ist und mindestens eine Fraktion eine Ethylencopolymerfraktion ist und wobei die mindestens eine Copolymerfraktion ein Copolymer aus mindestens einem alpha-Olefin ist, das aus alpha-Olefinen mit 4 bis 6 Kohlenstoffatomen ausgewählt ist, bevorzugt das alpha-Olefin 6 Kohlenstoffatome aufweist.

6. Polyethylenzusammensetzung nach einem der Ansprüche 4 bis 5, wobei die mindestens eine Ethylenhomopolymerfraktion und die mindestens eine Ethylencopolymerfraktion ein anderes Molekulargewicht Mw aufweisen.

7. Polyethylenzusammensetzung nach Anspruch 4 bis 5, wobei das Gewichts-(Gew.)-% der Homopolymerfraktion im Bereich von 50-60 Gew.-%, bevorzugt 55-59 Gew.-%, besonders bevorzugt 56-58 Gew.-% bezogen auf die Gesamtmenge des Ethylenpolymers liegt und/oder wobei der MFI 1,2 (190 °C, 1,2 kg), der gemäß ISO 1133:1997 bestimmt ist, der Homopolymerfraktion im Bereich von ≥2,0 bis 30 ≤g/10 min, bevorzugt von ≥3,0 bis ≤25 g/10 min, besonders bevorzugt von ≥4,0 bis ≤25 g/10 min liegt.

8. Polyethylenzusammensetzung nach einem der Ansprüche 1 bis 7, wobei das Ethylenpolymer einen Comonomergehalt im Bereich von ≥0,1 bis ≤0,3 Mol-%, bevorzugt im Bereich von ≥0,15 bis ≤0,25 Mol-% aufweist.

9. Polyethylenzusammensetzung nach einem der Ansprüche 1 bis 8, wobei das Ethylenpolymer eine Charpy-Schlagzähigkeit im Bereich von ≥15 kJ/m$^2$ bis ≤30 kJ/m$^2$, bevorzugt im Bereich im Bereich von ≥18 kJ/m$^2$ bis ≤28 kJ/m$^2$, die gemäß ISO 179-1eA gemessen ist, bei -30 °C und/oder eine Charpy-Schlagzähigkeit bei 23 °C im Bereich von ≥25 kJ/m$^2$ bis ≤40 kJ/m$^2$, bevorzugt im Bereich im Bereich von ≥28 kJ/m$^2$ bis ≤38 kJ/m$^2$, die gemäß ISO 179-1eA gemessen ist, und/oder ein Kaltverfestigungsmodul von mindestens 42 MPa, das gemäß ISO/DIS 18488 gemessen ist, und/oder ein Kaltverfestigungsmodul im Bereich von ≥42 MPa bis ≤65 MPa, bevorzugt im Bereich von ≥42 MPa bis ≤60 MPa, das gemäß ISO/DIS 18488 gemessen ist, und/oder eine Streckspannung im Bereich von ≥20 MPa bis ≤30 MPa, bevorzugt im Bereich von ≥22 MPa bis ≤29 MPa und/oder ein Kriechen bei 5,4 MPa und 80 °C nach 60 min von ≤6 %, bevorzugt von ≤5 % aufweist.

10. Polyethylenzusammensetzung nach einem der Ansprüche 1 bis 9, wobei die Polyethylenzusammensetzung mindestens 95 Gew.-% des Ethylenpolymers, bevorzugt mindestens 97 Gew.-% bezogen auf die Gesamtmenge der Zusammensetzung umfasst.

11. Prozess zur Produktion einer Polyethylenzusammensetzung nach einem der vorhergehenden Ansprüche, wobei das Ethylenpolymer in einem mehrstufigen Prozess, bevorzugt in einem bimodalen Prozess produziert wird.

12. Prozess nach Anspruch 11, wobei das Ethylenpolymer in der Anwesenheit eines Ziegler-Natta-Katalysators, der eine feste Katalysatorkomponente umfasst, die mit einem Cokatalysator auf Aluminiumbasis in Kontakt gebracht wird, polymerisiert wird.

13. Artikel, der bevorzugt ein Rohr ist, umfassend die Polyethylenzusammensetzung nach einem der Ansprüche 1 bis 10 oder Polyethylenzusammensetzung, die durch den Prozess nach einem der Ansprüche 11 bis 12 erhalten wird.

**14.** Verwendung einer Polyethylenzusammensetzung nach einem der Ansprüche 1 bis 10 zur Produktion eines Artikels.

**15.** Verwendung einer Polyethylenzusammensetzung nach einem der Ansprüche 1 bis 10 zur Produktion eines Rohrs.

**Revendications**

**1.** Composition de polyéthylène comprenant un polymère d'éthylène ayant une densité dans la plage de $\geq 950$ kg/m$^3$ et $\leq 958$ kg/m$^3$, déterminée selon ISO 1183-1:2004, un indice de fusion MFR 5 (190°C, 5 kg) dans la plage de $\geq 0,16$ g/10 min à $\leq 0,26$ g/10 min, déterminé selon ISO 1133:1997, un rapport de fusion FRR (190°C, 21,6/5 kg) dans la plage de $\geq 22$ à $\leq 40$, une viscosité complexe à 100 rad/s et 190°C (eta100) d'au moins 2500 Pa.s et une viscosité complexe à 0,01 rad/s et 190°C (eta0,01) d'au moins 250000 Pa.s.

**2.** Composition de polyéthylène selon la revendication 1, dans laquelle le polymère d'éthylène a une densité dans la plage de $\geq 952$ kg/m$^3$ et $\leq 955$ kg/m$^3$, déterminée selon ISO 1183-1:2004 et/ou un indice de fusion MFR 5 (190°C, 5 kg) dans la plage de $\geq 0,17$ g/10 min à $\leq 0,25$ g/10 min, déterminé selon l'ISO 1133:1997 et/ou un rapport de fusion FRR (190°C, 21,6/5 kg) dans la plage de $\geq 23$ à $\leq 38$ et/ou une viscosité complexe à 100 rad/s et 190°C (eta$_{100}$) d'au moins 2700 Pa.s, préférablement d'au moins 2800 Pa.s, et/ou une viscosité complexe à 0,01 rad/s et 190°C (eta$_{0,01}$) d'au moins 280000 Pa.s, plus préférablement d'au moins 300 000 Pa.s, encore plus préférablement d'au moins 320000 Pa.s.

**3.** Composition de polyéthylène selon l'une quelconque des revendications 1 à 2, dans laquelle le polymère d'éthylène a un Mw dans la plage de $\geq 270$ kg/mol à $\leq 350$ kg/mol, préférablement un Mw dans la plage de $\geq 280$ kg/mol à $\leq 340$ kg/mol, plus préférablement un Mw dans la plage de $\geq 290$ kg/mol à $\leq 330$ kg/mol et/ou un Mw/Mn dans la plage de $\geq 20$ à $\leq 35$, préférablement un Mw/Mn dans la plage de $\geq 23$ à $\leq 35$, plus préférablement un Mw/Mn dans la plage de $\geq 23$ à $\leq 33$, encore plus préférablement un Mw/Mn dans la plage de $\geq 23$ à $\leq 30$.

**4.** Composition de polyéthylène selon l'une quelconque des revendications 1 à 3, dans laquelle le polymère d'éthylène comprend au moins deux fractions dans lesquelles au moins une fraction est une fraction d'homopolymère d'éthylène et au moins une fraction est une fraction de copolymère d'éthylène et dans laquelle l'au moins une fraction de copolymère d'éthylène est un copolymère d'au moins une alpha-oléfine choisie parmi les alpha-oléfines ayant 3 à 12 atomes de carbone.

**5.** Composition de polyéthylène selon l'une quelconque des revendications 1 à 3, dans laquelle le polymère d'éthylène comprend au moins deux fractions dans lesquelles au moins une fraction est une fraction d'homopolymère d'éthylène et au moins une fraction est une fraction de copolymère d'éthylène et dans laquelle l'au moins une fraction de copolymère est un copolymère d'au moins une alpha-oléfine choisie parmi les alpha-oléfines ayant 4 à 6 atomes de carbone, préférablement l'alpha-oléfine a 6 atomes de carbone.

**6.** Composition de polyéthylène selon l'une quelconque des revendications 4 à 5, dans laquelle l'au moins une fraction d'homopolymère d'éthylène et l'au moins une fraction de copolymère d'éthylène ont un poids moléculaire Mw différent.

**7.** Composition de polyéthylène selon les revendications 4 à 5, dans laquelle le % en poids (en poids) de la fraction d'homopolymère se situe dans la plage de 50 à 60% en poids, préférablement de 55 à 59% en poids, plus préférablement de 56 à 58% en poids sur la base de la quantité totale du polymère d'éthylène et/ou dans laquelle le MFI1.2 (190°C, 1,2 kg), déterminé selon ISO 1133:1997 de la fraction d'homopolymère est dans la plage de $\geq 2,0$ à 30 $\leq$ g/10min, préférablement de $\geq 3,0$ à 25 $\leq$ g/10 min, plus préférablement de $\geq 4,0$ à $\leq 25$ g/10 min.

**8.** Composition de polyéthylène selon l'une quelconque des revendications 1 à 7, dans laquelle le polymère d'éthylène a une teneur en comonomère dans la plage de $\geq 0,1$ à $\leq 0,3\%$ en mole, préférablement dans la plage de $\geq 0,15$ à $\leq 0,25\%$ en mole.

**9.** Composition de polyéthylène selon l'une quelconque des revendications 1 à 8, dans laquelle le polymère d'éthylène a une résistance au choc Charpy dans la plage de $\geq 15$ kJ/m$^2$ à $\leq 30$ kJ/m$^2$, préférablement dans la plage de $\geq 18$ kJ/m$^2$ à $\leq 28$ kJ/m$^2$, mesurée selon ISO 179-1eA à -30 °C et/ou une résistance au choc Charpy à 23 °C dans la plage de $\geq 25$ kJ/m$^2$ à $\leq 40$ kJ/m$^2$, préférablement dans la plage de $\geq 28$ kJ/m$^2$ à $\leq 38$ kJ/m$^2$ mesurée selon ISO 179-1eA et/ou un module d'écrouissage d'au moins 42 MPa, mesuré selon ISO/DIS 18488, et/ou un module d'écrouissage dans la plage de $\geq$ 42 MPa à $\leq$ 65 MPa, préférablement dans la plage de $\geq$ 42 MPa à $\leq$ 60 MPa, mesuré selon ISO/DIS 18488 et/ou une limite d'élasticité dans la plage de $\geq$ 20 MPa à $\leq$ 30 MPa, préférablement dans la plage de $\geq$ 22 MPa à $\leq$ 29 MPa et/ou un fluage à 5,4 MPa et 80 °C après 60 min de $\leq$ 6%, préférablement de $\leq$ 5%.

10. Composition de polyéthylène selon l'une quelconque des revendications 1 à 9, dans laquelle la composition de polyéthylène comprend au moins 95% en poids du polymère d'éthylène, préférablement au moins 97% en poids sur la base de la quantité totale de la composition.

11. Procédé de production d'une composition de polyéthylène selon l'une quelconque des revendications précédentes, dans lequel le polymère d'éthylène est produit dans un procédé à plusieurs étapes, préférablement dans un procédé bimodal.

12. Procédé selon la revendication 11, dans lequel le polymère d'éthylène est polymérisé en présence d'un catalyseur Ziegler Natta comprenant un composant catalyseur solide qui est mis en contact avec un cocatalyseur à base d'aluminium.

13. Article, préférablement un tuyau, comprenant la composition de polyéthylène selon l'une quelconque des revendications 1 à 10 ou la composition de polyéthylène obtenue par le procédé selon l'une quelconque des revendications 11 à 12.

14. Utilisation d'une composition de polyéthylène selon l'une quelconque des revendications 1 à 10 pour la fabrication d'un article.

15. Utilisation d'une composition de polyéthylène selon l'une quelconque des revendications 1 à 10 pour la fabrication d'un tuyau.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013101767 A
- US 4178300 A
- EP 0876318 A
- WO 2013087167 A

### Non-patent literature cited in the description

- PE 100 Pipe systems. 16-20
- **ALT et al.** Bimodal polyethylene-Interplay of catalyst and process. *Macromol.Symp.,* 2001, vol. 163, 135-143
- **ALT et al.** Bimodal polyethylene-Interplay of catalyst and process. *Macromol.Symp.,* 2001, vol. 163, 137-138
- **M. DE POOTER et al.** 42. *Journal of Applied Polymer Sci,* 1991, 399
- **J.C.RANDALL.** *J.Macromol. Sci. Rev. Macromol. Chem. Phys.,* 1989, vol. C229, 225
- **G.XU ; E.RUCKENSTEIN.** *Macromolecules,* 1998, 4724
- **RANDALL, I.M.S.** C29. *Rev. Macromol.Chem.Phys.,* 1989, (2/3), 201-317
- **SAHOO et al.** *Macromolecules,* 2003, vol. 36, 4017-4028
- **R. SEEGER ; G. MACIEL.** *Anal. Chem.,* 2004, vol. 76, 5734-5747
- **W. LIU ; P. RINALDI.** *Macromelecules,* 2001, vol. 34, 4757-4767
- **RINALDI.** *Macromolecules,* 2003, vol. 36, 4017-4028